# EUROPÄISCHE PATENTANMELDUNG

(11) **EP 4 270 263 A1**
(43) Veröffentlichungstag der Anmeldung: **01.11.2023**
(21) Anmeldenummer: 22188793.8
(22) Anmeldetag: 04.08.2022
(51) Int. Cl.: G06N 10/70, G06N 10/40

(54) **VERFAHREN ZUR VERARBEITUNG EINES QUANTENSENSORSIGNALS MINDESTENS EINES QUANTENSENSORS UND MESSANALYSESYSTEM MIT MINDESTENS EINEM QUANTENSENSOR**

(30) Priorität: 29.04.2022 DE 102022204234
(71) Anmelder: Siemens Aktiengesellschaft, 80333 München (DE)
(72) Erfinder: Mauerer, Wolfgang, 93093 Donaustauf (DE); Niedermeier, Christoph, 80999 München (DE); Wintersperger, Karen, 80804 München (DE); von Sicard, Oliver, 81541 München (DE)
(74) Vertreter: Siemens Patent Attorneys

(57) **Zusammenfassung**

Bei dem Verfahren zur Verarbeitung eines Quantensensorsignals mindestens eines Quantensensors wird mittels des Quantensensors mindestens ein Quantensensorsignal in Gestalt eines quantenphysikalischen Überlagerungszustandes erhalten und dieser mindestens eine Überlagerungszustand mittels Quanteninformationsverarbeitung verarbeitet.

Das Messanalysesystem weist mindestens einen Quantensensor, der zur Bereitstellung mindestens eines Quantensensorsignals in Gestalt eines quantenphysikalischen Überlagerungszustands eingerichtet ist, und einen Quantencomputer mit einem Quantenregister und einer Quantenlogikvorrichtung zur Quanteninformationsverarbeitung des Quantenregisters auf. Bei dem Messanalysesystem ist das mindestens eine Quantensensorsignal in mindestens einen Überlagerungszustand des Quantenregisters überführbar.

## Beschreibung

Die Erfindung betrifft ein Verfahren zur Verarbeitung eines Quantensensorsignals eines Quantensensors und ein Messanalysesystem mit einem Quantensensor.

Es sind Messanalysesysteme mit Quantensensoren bekannt, bei welchen die Quantensensoren spezielle Eigenschaften von Quantensystemen wie Verschränkung oder Interferenz nutzen, um eine höhere Präzision zu erreichen, als es mit herkömmlichen klassischen Sensoren möglich ist.

Solche Quantensensoren werden insbesondere bei der Detektion von elektrischen oder magnetischen Feldern eingesetzt, wobei die Empfindlichkeit von Quantenzuständen gegenüber Umgebungseinflüssen genutzt wird.

Vor dem Hintergrund des Standes der Technik ist es Aufgabe der Erfindung, ein verbessertes Verfahren zur Verarbeitung eines Quantensensorsignals eines Quantensensors und ein verbessertes Messanalysesystem mit einem Quantensensor anzugeben.

Diese Aufgabe der Erfindung wird mit einem Verfahren mit den in Anspruch 1 angegebenen Merkmalen sowie mit einem Messanalysesystem mit den in Anspruch 7 angegebenen Merkmalen und mit einem Kernspin-Resonanz-Tomographen und mit einer Fertigungseinrichtung und mit einer Wartungseinrichtung mit den in Anspruch 15 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zur Verarbeitung mindestens eines Quantensensorsignals mindestens eines Quantensensors wird mittels des mindestens einen Quantensensors mindestens ein Quantensensorsignal in Gestalt mindestens eines quantenphysikalischen Überlagerungszustandes erhalten und dieser mindestens eine Überlagerungszustand ohne vorhergehende Reduktion mittels Quanteninformationsverarbeitung verarbeitet.

Bei dem erfindungsgemäßen Verfahren wird also nicht wie bislang üblich zunächst ein Quantensensorsignal des mindestens einen Quantensensors gemessen und damit reduziert, sondern es wird das mindestens eine Quantensensorsignal als quantenphysikalischer Überlagerungszustand beibehalten und ohne zwischenliegende Messung, d. h. ohne vorhergehende Reduktion des quantenphysikalischen Überlagerungszustandes der Quanteninformationsverarbeitung zugänglich gemacht. Mittels des erfindungsgemäßen Verfahrens können somit spezielle Quanteneigenschaften wie die relative Phaseninformation eines Überlagerungszustandes oder die Verschränkung des mindestens einen Überlagerungszustandes, etwa die Verschränkung mehrerer Qubits des mindestens einen Quantensensorsignals, zur Quanteninformationsverarbeitung genutzt werden. Mittels des erfindungsgemäßen Verfahrens ist folglich nicht allein eine verbesserte Detektion mittels des mindestens einen Quantensensors möglich, sondern zugleich ist auch eine verbesserte Quanteninformationsverarbeitung des mindestens einen Quantensensorsignals möglich. Eine Datenauswertung kann folglich schneller und qualitativ verbessert erfolgen. Ebenso vorteilhaft können quantengestützte Analyseverfahren bei der Quanteninformationsverarbeitung direkt genutzt werden. Denn solche quantengestützten Analyseverfahren benötigen regelmäßig Eingangsdaten in Gestalt mindestens eines quantenphysikalischen Überlagerungszustandes, welcher bei dem erfindungsgemäßen Verfahren vorteilhaft bereits in Gestalt des mindestens einen Quantensensorsignals des mindestens einen Quantensensors zur Verfügung steht. Eine aufwendige Kodierung eines klassischen Signals in einen quantenphysikalischen Überlagerungszustand ist bei dem erfindungsgemäßen Verfahren also vorteilhaft entbehrlich.

Zweckmäßig sind die quantenphysikalischer Überlagerungszustände mittels Qubits realisiert. Vorzugsweise sind die Qubits mit Ionenfallen, Kristallfehlstellen, insbesondere in Diamantkristallen, und/oder als supraleitende Qubits gebildet.

Bei dem erfindungsgemäßen Verfahren umfasst die Quanteninformationsverarbeitung in einer bevorzugten Weiterbildung eine Datenanalyse, insbesondere Quantum Machine Learning und/oder Quantum Image Processing. Auf diese Weise könnten Quantensensorsignale leicht mittels quantengestützten Datenanalysen analysiert werden. Insbesondere können bei dem erfindungsgemäßen Verfahren Quantensensorsignale auf sehr direkte Weise Auswertverfahren wie Quantum Machine Learning und/oder Quantum Image Processing zugänglich gemacht werden, sodass bislang nicht oder nur aufwändig verfügbare komplexe Auswertverfahren nunmehr für Quantensensoren zur Verfügung stehen.

Bei dem Verfahren gemäß der Erfindung erschöpft sich die Quanteninformationsverarbeitung bevorzugt nicht in einer Detektion mittels des mindestens einen Quantensensors. Es handelt sich bei der Quanteninformationsverarbeitung in dieser Weiterbildung der Erfindung folglich um eine tatsächliche quantenlogische Quanteninformationsverarbeitung im engen Sinne, d. h. um eine Quanteninformationsverarbeitung mittels quantenlogischer Prozesse.

Bei dem erfindungsgemäßen Verfahren umfasst die Quanteninformationsverarbeitung vorzugsweise die Anwendung quantenlogischer Operationen, insbesondere die Anwendung quantenlogischer Gatter und/oder eine Quanten-Fourier-Transformation.

Besonders bevorzugt schöpfen in einer vorteilhaften Weiterbildung des erfindungsgemäßen Verfahrens die quantenlogischen Operationen mindestens einen universellen Satz, d. h. eine universelle Menge, von Quantengattern aus, d. h. die Quanteninformationsverarbeitung nutzt jedes Quantengatter des universellen Satzes mindestens einmal.

Bei dem Verfahren wird in einer bevorzugten Weiterbildung der Erfindung der mindestens eine Überlagerungszustand des mindestens einen Quantensensorsignals gespeichert, insbesondere in mindestens einem als Quantenspeicher ausgebildeten Quantenregister. In dieser Weiterbildung der Erfindung müssen die Quantensensorsignale nicht so lange von dem mindestens einen Quantensensor bereitgehalten werden, bis die Quantensensorsignale mittels Quanteninformationsverarbeitung weiterverarbeitet werden. Stattdessen können Quantensensorsignale gespeichert werden, sodass der mindestens eine Quantensensor bereits für eine Erfassung neuer Quantensensorsignale bereitstehen kann. Die Erfassungsrate des mindestens einen Quantensensors ist folglich von der Nutzung der Quantensensorsignale für die Quanteninformationsverarbeitung unabhängig und vorteilhaft nicht begrenzt.

Das erfindungsgemäße Messanalysesystem weist mindestens einen Quantensensor, der zur Bereitstellung mindestens eines Quantensensorsignals in Gestalt eines quantenphysikalischen Überlagerungszustands eingerichtet ist, und einen Quantencomputer mit einem Quantenregister und einer Quantenlogikvorrichtung zur Quanteninformationsverarbeitung des Quantenregisters auf. Bei dem erfindungsgemäßen Messanalysesystem ist das mindestens eine Quantensensorsignal in Gestand des Überlagerungszustands ohne vorhergehende Reduktion in einen Überlagerungszustand des Quantenregisters überführbar oder das Quantensensorsignal bildet ohne vorhergehende Reduktion den Überlagerungszustand des Quantenregisters.

Bei dem erfindungsgemäßen Messanalysesystem wird folglich nicht wie bislang üblich ein klassisches Messsignal des mindestens einen Quantensensors erhalten und nachfolgend das klassische Messsignal in einen quantenphysikalischen Überlagerungszustand einkodiert, der dann wiederum der Quantenlogikvorrichtung übermittelt wird. Stattdessen kann eine Quanteninformationsverarbeitung des mindestens einen Quantensensorsignals direkt, d. h. ohne vorhergehende Reduktion, des im Überlagerungszustand befindlichen Quantensensorsignals erfolgen. Mit dem erfindungsgemäßen Messanalysesystem lässt sich also vorteilhaft das erfindungsgemäße Verfahren wie es oben beschrieben ist, einfach ausführen. Entsprechend weist das erfindungsgemäße Messanalysesystem die bereits zum erfindungsgemäßen Verfahren beschriebenen Vorteile auf.

Bevorzugt ist bei dem Messanalysesystem gemäß der Erfindung das Quantenregister ein Quantenspeicher. Mittels des Quantenspeichers, insbesondere eines Q-RAMs, können die Zustände des Quantensensors vorteilhafterweise zwischengespeichert werden, sodass der mindestens eine Quantensensor den Quantensensorzustand nicht so lange aufrechterhalten muss, bis die Quantenlogikvorrichtung das Quantensensorsignal verarbeitet. Stattdessen kann der mindestens eine Quantensensor wieder in einen messbereiten Betriebszustand versetzt werden, sodass mittels des mindestens einen Quantensensors eine hohe Datenrate erzielt werden kann. Der Betrieb des mindestens einen Quantensensors ist folglich nicht durch die Abnahme des mindestens einen Quantensensorsignals durch die Quantenlogikvorrichtung limitiert, sondern es können auch sukzessive mehrere Quantensensorsignale erfasst werden und gemeinsam mittels mehrerer Quantenregister in Form von Quantenspeichern der Quantenlogikvorrichtung zugeführt werden. In dieser Weiterbildung sind bei dem erfindungsgemäßen Messanalysesystem folglich auch komplexe quantenlogische Verfahren der Quanteninformationsverarbeitung implementierbar.

In einer geeigneten Weiterbildung der Erfindung ist bei dem Messanalysesystem das mindestens eine Quantensensorsignal mittels eines Zustandstransfers und/oder mittels eines Qubit-Transfers, insbesondere mittels eines Teilchentransfers und/oder mittels eines Quasiteilchentransfers und/oder mittels eines Feldtransfers oder mittels eines Transfers von Kristallfehlstellen oder mittels eines Transfers einer oder mehrerer Ionenfallen oder mittels einer Wechselwirkung des Quantensensorsignals mit dem Quantenregister überführbar. Auf diese Weise lässt sich das Quantensensorsignal oder der Überlagerungszustand des Quantensensorsignals einfach der Quantenlogikvorrichtung zur weiteren Quanteninformationsverarbeitung zuführen.

Vorzugsweise umfasst bei dem erfindungsgemäßen Messanalysesystem die Quanteninformationsverarbeitung eine Datenanalyse, insbesondere Quantum Machine Learning und/oder Quantum Image Processing. Insbesondere im Falle des Quantum Machine Learnings und/oder des Quantum Image Processings kann der erfindungsgemäß mögliche Vorteil der direkten Quanteninformationsverarbeitung eines vom Quantensensor bereitgestellten quantenphysikalischen Überlagerungszustands leicht verwirklicht werden.

In einer vorteilhaften Weiterbildung des erfindungsgemäßen Messanalysesystems erschöpft sich die Quanteninformationsverarbeitung vorzugsweise nicht in einer Detektion mittels des mindestens einen Quantensensorsignals, d. h. die Quanteninformationsverarbeitung ist tatsächlich nicht allein eine verbesserte Bestimmung der mittels des mindestens einen Quantensensors erfassten Messgröße. Stattdessen wird in dieser Weiterbildung das mindestens eine Quantensensorsignal derart verarbeitet, dass ein Verarbeitungsergebnis der Quanteninformationsverarbeitung über eine lediglich verbesserte Detektion mittels des mindestens einen Quantensensorsignals hinausgeht. Das mindestens eine Quantensensorsignal wird also besonders bevorzugt mit weiteren Größen oder Signalen zu einer neuen Information verknüpft.

Bei dem Messanalysesystem gemäß der Erfindung umfasst die Quantenlogikvorrichtung eine Anordnung und/oder Abfolge quantenlogischer Gatter und/oder einer Anordnung zur Durchführung einer Quanten-Fourier-Transformation. In dieser Weiterbildung der Erfindung sind folglich komplexe Algorithmen der Quanteninformationsverarbeitung verfügbar.

Besonders bevorzugt ist bei dem Messanalysesystem die Quantenlogikvorrichtung zur Bildung jedes Quantengatters mindestens eines universellen Satzes von Quantengattern konfigurierbar, d. h. die Quantenlogikvorrichtung kann zur, mindestens einmaligen, Nutzung jedes Quantengatters des universellen Satzes konfiguriert werden. Die Quantenlogikvorrichtung des Messanalysesystems ist zweckmäßig eingerichtet, zur Nutzung eines jeden Quantengatters des universellen Satzes konfigurierbar zu sein. Auf diese Weise können mittels des erfindungsgemäßen Messanalysesystems mehrere unterschiedliche, grundsätzlich beliebige, insbesondere beliebig komplexe, Algorithmen der Quanteninformationsverarbeitung umgesetzt werden.

In einer vorteilhaften Weiterbildung des erfindungsgemäßen Messanalysesystems weist die Quantenlogikvorrichtung jedes Quantengatter eines universellen Satzes von Quantengattern, etwa des universellen Satzes wie in der vorhergehenden Weiterbildung beschrieben oder eines davon verschiedenen universellen Satzes, mindestens einmal, auf. In dieser Weiterbildung der Erfindung können bei der Quantenlogikvorrichtung folglich hinreichend komplexe Algorithmen der Quanteninformationsverarbeitung implementiert sein.

Der erfindungsgemäße Kernspin-Resonanz-Tomograph und/oder die erfindungsgemäße Fertigungseinrichtung und/oder die erfindungsgemäße Wartungseinrichtung und/oder die erfindungsgemäße Logistikeinrichtung ist/sind jeweils eingerichtet zur Ausführung eines erfindungsgemäßen Verfahrens wie vorhergehend beschrieben und/oder weist ein erfindungsgemäßes Messanalysesystem wie zuvor beschrieben auf.

Vorzugsweise ist im Falle eines erfindungsgemäßen Kernspin-Resonanz-Tomographen die Quantenlogikvorrichtung zur Quanteninformationsverarbeitung von Kernspin-Resonanz-Signalen ausgebildet. Bei der erfindungsgemäßen Fertigungseinrichtung hingegen ist die Quantenlogikvorrichtung vorzugsweise zur Quanteninformationsverarbeitung von Fertigungssignalen, insbesondere von Feedbacksignalen, welche bei der Fertigung auftreten und welche besonders bevorzugt zur Anpassung des Fertigungsprozesses herangezogen werden, ausgebildet. Bevorzugt ist im Falle einer erfindungsgemäßen Wartungseinrichtung die Quantenlogikvorrichtung zur Quanteninformationsverarbeitung von Wartungs-Signalen ausgebildet, etwa von Wartungs-Signalen zum Zustand eines zu wartenden Objekts. Zweckmäßig ist im Falle einer erfindungsgemäßen Logistikvorrichtung die Quantenlogikvorrichtung zur Quanteninformationsverarbeitung von Logistik-Signalen ausgebildet.

Nachfolgend wird die Erfindung anhand eines in der Zeichnung dargestellten Ausführungsbeispiels näher erläutert. Es zeigen:
- Fig. 1: ein herkömmliches Messanalysesystem mit einem Quantensensor zur herkömmlichen Informationsverarbeitung eines Quantensensorsignals des Quantensensors schematisch in einer Prinzipskizze sowie
- Fig. 2: ein erfindungsgemäßes Quanten-Messanalysesystem mit einem Quantensensor und einem Quantencomputer zur Ausführung des erfindungsgemäßen Verfahrens zur Verarbeitung eines Quantensensorsignals des Quantensensors schematisch in einer Prinzipskizze.

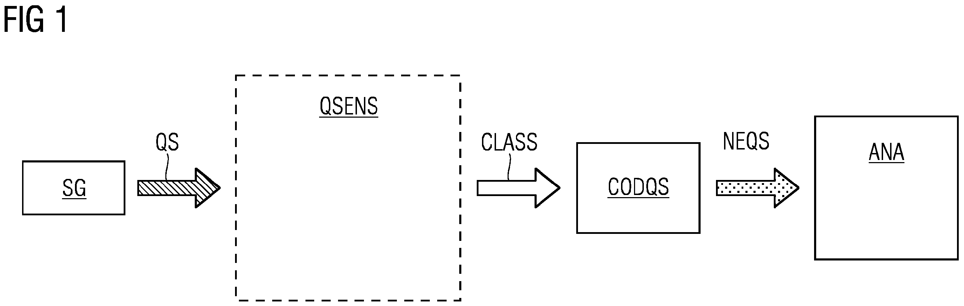

Das in Fig. 1 dargestellte Messanalysesystem verwendet zur Messung eines Quantensensorsignals einen Quantensensor QSENS. Im dargestellten Ausführungsbeispiel ist der Quantensensor QSENS ein Quantensensor QSENS eines erfindungsgemäßen Kernspin-Resonanz-Tomographen. Der Quantensensor QSENS ist ein Magnetfeldsensor, der die Präzessionsfrequenz von Atomkernen in externen magnetischen Feldern mittels Quantenmessungen misst. Dazu werden in an sich bekannter Weise vom Messobjekt, im dargestellten Ausführungsbeispiel eine Gewebeprobe, Quantensensorsignale SG erhalten.

Diese Quantensensorsignale SG sind dabei Quantensensorsignale SG in Form quantenphysikalischer Überlagerungszustände, die der Quantensensor QSENS zur Erhöhung der Messgenauigkeit heranzieht. Die Quantensensorsignale SG des Messobjekts bilden folglich nichtklassische Zustände, welche im Folgenden auch kurz als Quantenzustände QS bezeichnet werden.

Zur Auswertung der vom Quantensensor erhaltenen Information wird der jeweils vom Quantensensor QSENS erhaltene Quantenzustand QS mittels eines Messvorgangs zu einem klassischen Zustand reduziert. D. h. der vom Quantensensor QSENS erfasste Quantenzustand QS bleibt nicht erhalten, sondern wird irreversibel zu einem klassischen Zustand CLASS reduziert.

Der klassische Zustand CLASS kann nun nachfolgend ausgewertet werden, etwa mittels eines Quantencomputers. Dazu wird der klassische Zustand CLASS in einen Quantenzustand mittels eines Kodiervorgangs CODQS in einen neuen Quantenzustand NEQS einkodiert und dem Quantencomputer zur Verfügung gestellt. Der Quantencomputer führt eine Analyse ANA durch, um die vom Quantensensor QSENS zur Verfügung gestellten klassischen Zustände CLASS mittels einer Quanteninformationsverarbeitung auszuwerten. Die Analyse umfasst im dargestellten Ausführungsbeispiel eine Quantenbildauswertung, die auch als "Quantum Image Processing" bekannt ist.

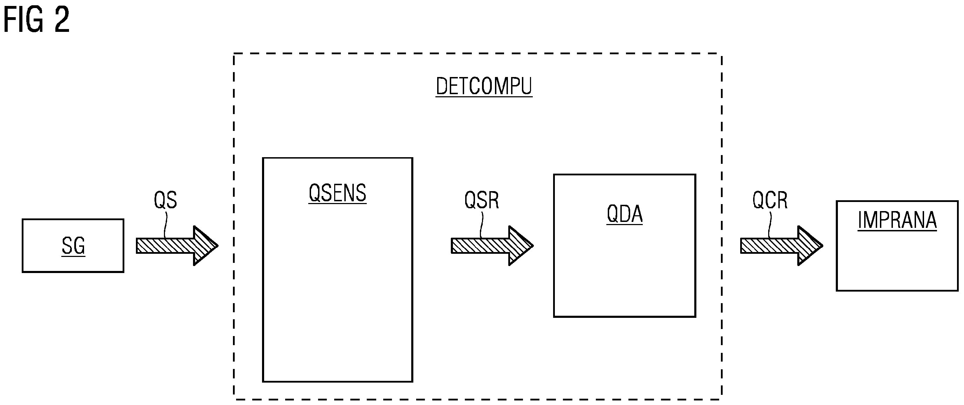

Im Gegensatz dazu wird bei dem in Fig. 2 dargestellten erfindungsgemäßen Quanten-Messanalysesystem mittels des erfindungsgemäßen Verfahrens zur Verarbeitung eines Quantensensorsignals eines Quantensensors die volle Information des quantenphysikalischen Überlagerungszustandes QS genutzt.

Auch das in Fig. 2 dargestellte erfindungsgemäße Quanten-Messanalysesystem dient zur Messung und Verarbeitung von Quantensensorsignalen SG eines Kernspin-Resonanz-Tomographen. Wie in dem in Fig. 1 dargestellten Messanalysesystem sind bei der integrierten Detektions- und Verarbeitungseinheit DETCOMPU der Zeichnungsfigur 2 ein oder mehrere Quantensensoren eines Kernspin-Resonanz-Tomographen, vorhanden, die die Präzessionsfrequenz von Atomkernen in externen magnetischen Feldern misst und dazu Quantensensorsignale SG in Form quantenphysikalischer Überlagerungszustände heranzieht. Die Quantensensorsignale SG bilden auch im in Fig. 2 dargestellten Ausführungsbeispiel Quantenzustände QS aus.

Im Gegensatz zum in Fig. 1 dargestellten Messanalysesystem allerdings wird bei der integrierten Detektions- und Verarbeitungseinheit DETCOMPU der Fig. 2 der Quantenzustand QS nicht zunächst mittels einer Messung reduziert und nachfolgend einer Informationsverarbeitung unterzogen, sondern der Quantenzustand QS wird zunächst auf ein Quantenregister von Qubits übertragen. Dabei wird der Quantenzustand QS derart auf das Quantenregister übertragen, dass sich die Qubits des Quantenregisters in einem Überlagerungszustand von Qubit-Zuständen befinden. Dieses Quantenregister (in der Zeichnung nicht explizit gezeigt) befindet sich folglich in einem solchen Quantenregisterzustand QRS, welcher in seinem Informationsgehalt dem ursprünglichen Quantenzustand QS entspricht. Dies kann entweder sehr direkt durch einen Transfer der Qubits selbst erfolgen oder wie in dem in Fig. 2 dargestellten Fall mittels einer Wechselwirkung des Quantensensorsignals des Quantensensors QS mit dem Quantenregister. Der ursprüngliche Quantenzustand QS selbst wird im dargestellten Ausführungsbeispiel bei der Übertragung auf das Quantenregister zerstört.

Das Quantenregister speichert nun den Quantenregisterzustand QSR und bildet folglich einen Quantenspeicher in der Art eines Q-RAMs, sodass der Quantensensor QSENS weitere Quantenmessungen anstellen kann.

Das Quantenregister ist mit einem Quantenschaltkreis der Detektions- und Verarbeitungseinheit DETCOMPU temporär verbindbar. Wird das Quantenregister mit dem Quantenschaltkreis der Detektions- und Verarbeitungseinheit verbunden, so passiert der Quantenregisterzustand QSR des Quantenregisters als quantenphysikalischer Überlagerungszustand eine Quantenlogikanordnung QDA mit einer Vielzahl quantenlogischer Gatter, mittels derer eine Quanteninformationsverarbeitung des Quantenregisterzustands QSR erfolgt. Die einzelnen quantenlogischen Gatter realisieren einen quantenlogischen Algorithmus, der unter anderem eine Quanten-Fourier-Transformation mit einschließt. Für ein Zwischenergebnis der Quanteninformationsverarbeitung des Quantenregisterzustands QSR wird ein Ausgabequantenregister bereitgestellt, in welchem Ausgabequbits einen quantenphysikalischen Ausgabequantenregisterzustand QCR einnehmen, der als quantenphysikalische Überlagerung von Ausgabequbitzuständen realisiert ist. Mittels dieses Ausgabequbits kann, etwa durch repetetive Messungen an sukzessive aufeinanderfolgenden Ausgabequbitzuständen und mittels weiterer quantenlogische Operationen IMPRANA und nachfolgende Messungen, ein Endergebnis der Quanteninformationsverarbeitung erhalten werden. Der quantenlogische Algorithmus und die weiteren quantenlogischen Operationen IMPRANA werden dazu an dem Ausgabequantenregisterzustand QCR vorgenommen.

In weiteren, nicht eigens dargestellten Ausführungsbeispielen ist das erfindungsgemäße Quanten-Messanalysesystem kein Kernspin-Resonanz-Tomograph, sondern eine erfindungsgemäße Fertigungseinrichtung und anstelle einer Gewebeprobe wird ein Messobjekt in Gestalt eines Werkstücks vermessen. Alternativ ist das Messanalysesystem in weiteren Ausführungsbeispielen eine Wartungseinrichtung und das Messobjekt ein Werkstück oder das Messanalysesystem ist eine Logistikvorrichtung.

## Patentansprüche

1. Verfahren zur Verarbeitung eines Quantensensorsignals (SG) mindestens eines Quantensensors (QSENS), bei welchem mittels des mindestens einen Quantensensors (QSENS) mindestens ein Quantensensorsignal (SG) in Gestalt mindestens eines quantenphysikalischen Überlagerungszustandes (QS) erhalten wird und dieser mindestens eine Überlagerungszustand (QS) ohne vorhergehende Reduktion mittels Quanteninformationsverarbeitung verarbeitet wird.

2. Verfahren nach Anspruch 1, bei welchem die Quanteninformationsverarbeitung eine Datenanalyse, insbesondere Quantum Machine Learning und/oder Quantum Image Processing, umfasst.

3. Verfahren nach einem der vorhergehenden Ansprüche, bei welchem sich die Quanteninformationsverarbeitung nicht in einer Detektion mittels des mindestens einen Quantensensors (QSENS) erschöpft.

4. Verfahren nach einem der vorhergehenden Ansprüche, bei welchem die Quanteninformationsverarbeitung die Anwendung quantenlogischer Operationen umfasst, insbesondere die Anwendung quantenlogischer Gatter und/oder eine Quanten-Fourier-Transformation.

5. Verfahren nach einem der vorhergehenden Ansprüche, bei welchem die quantenlogischen Operationen mindestens einen universellen Satz, d. h. eine universelle Menge, von Quantengattern ausschöpfen, vorzugsweise jedes Quantengatter des universellen Satzes mindestens einmal oder mehrmals nutzen.

6. Verfahren nach einem der vorhergehenden Ansprüche, bei welchem der Überlagerungszustand (QS) des Quantensensorsignals (SG) gespeichert wird, insbesondere in mindestens einem als Quantenspeicher ausgebildeten Quantenregister.

7. Messanalysesystem mit mindestens einem Quantensensor (QSENS), insbesondere ausgebildet zur Ausführung eines Verfahrens nach einem der vorhergehenden Ansprüche, wobei der Quantensensor (QSENS) zur Bereitstellung mindestens eines Quantensensorsignals (SG) in Gestalt eines quantenphysikalischen Überlagerungszustands (QS) eingerichtet ist, und mit einem Quantencomputer (QC), der ein Quantenregister und eine Quantenlogikvorrichtung (QDA) zur Quanteninformationsverarbeitung des Quantenregisters aufweist, wobei bei dem Messanalysesystem das mindestens Quantensensorsignal in Gestand des Überlagerungszustands ohne vorhergehende Reduktion in mindestens einen Überlagerungszustand (QSR) des Quantenregisters überführbar ist oder den Überlagerungszustand des Quantenregisters bildet.

8. Messanalysesystem nach einem der vorhergehenden Ansprüche, bei welche das Quantenregister ein Quantenspeicher ist.

9. Messanalysesystem nach einem der vorhergehenden Ansprüche, bei welchem das Quantensensorsignal (SG) mittels eines Zustandstransfers und/oder mittels eines Teilchentransfers und/oder mittels eines Quasiteilchentransfers und/oder mittels eines Feldtransfers und/oder mittels eines Ionenfallentransfers und/oder mittels eines Kristalldefekttransfers überführbar ist.

10. Messanalysesystem nach einem der vorhergehenden Ansprüche, bei welchem die Quanteninformationsverarbeitung eine Datenanalyse, insbesondere Quantum Machine Learning und/oder Quantum Image Processing, umfasst.

11. Messanalysesystem nach einem der vorhergehenden Ansprüche, bei welchem sich die Quanteninformationsverarbeitung vorzugsweise nicht in einer Detektion mittels des Quantensensors (QSENS) erschöpft.

12. Messanalysesystem nach einem der vorhergehenden Ansprüche, bei welchem die Quantenlogikvorrichtung (QDA) eine Anordnung und/oder Abfolge quantenlogischer Gatter und/oder einer Anordnung zur Durchführung einer Quanten-Fourier-Transformation umfasst.

13. Messanalysesystem nach einem der vorhergehenden Ansprüche, bei welchem die Quantenlogikvorrichtung zur Bildung jedes Quantengatters mindestens eines universellen Satzes von Quantengattern konfigurierbar ist.

14. Messanalysesystem nach einem der vorhergehenden Ansprüche, bei welchem die Quantenlogikvorrichtung jedes Quantengatter eines universellen Satzes von Quantengattern aufweist.

15. Kernspin-Resonanz-Tomograph und/oder Fertigungseinrichtung und/oder Wartungseinrichtung, eingerichtet zur Ausführung eines Verfahrens nach einem der vorhergehenden Ansprüche und/oder mit einem Messanalysesystem (DETCOMPU) nach einem der vorhergehenden Ansprüche.
